# FASCICULE DE BREVET EUROPEEN

(11) **EP 0 761 945 B1**
(45) Date de publication et mention de la délivrance du brevet: **30.05.2001**
(21) Numéro de dépôt: 96401803.0
(22) Date de dépôt: 22.08.1996
(51) Int. Cl.: F02C 7/20, B64D 27/26

(54) **Dispositif de suspension d'un turbopropulseur**
Aufhängungsstruktur für eine Turboproptriebwerk
Suspension device for a turboprop

(30) Priorité: 23.08.1995 FR 9509997
(43) Date de publication de la demande: 12.03.1997
(73) Titulaire: SNECMA MOTEURS, 75015 Paris (FR)
(72) Inventeur: Brossier, Pascal Noel, 77127 Lieusaint (FR); Miraucourt, Carmen, 77170 Brie Comte Robert (FR)

(56) Documents cités:
- EP-A- 0 303 405
- EP-A- 0 455 355
- GB-A- 2 049 817

## Description

La présente invention concerne un dispositif de suspension d'un turbopropulseur sur un élément structurel d'un avion.

Les turbopropulseurs de forte puissance présentent un couple de réaction très important selon l'axe du moteur, du fait que l'air arrive sur l'hélice avec une trajectoire rectiligne et en ressort avec une trajectoire hélicoïdale.

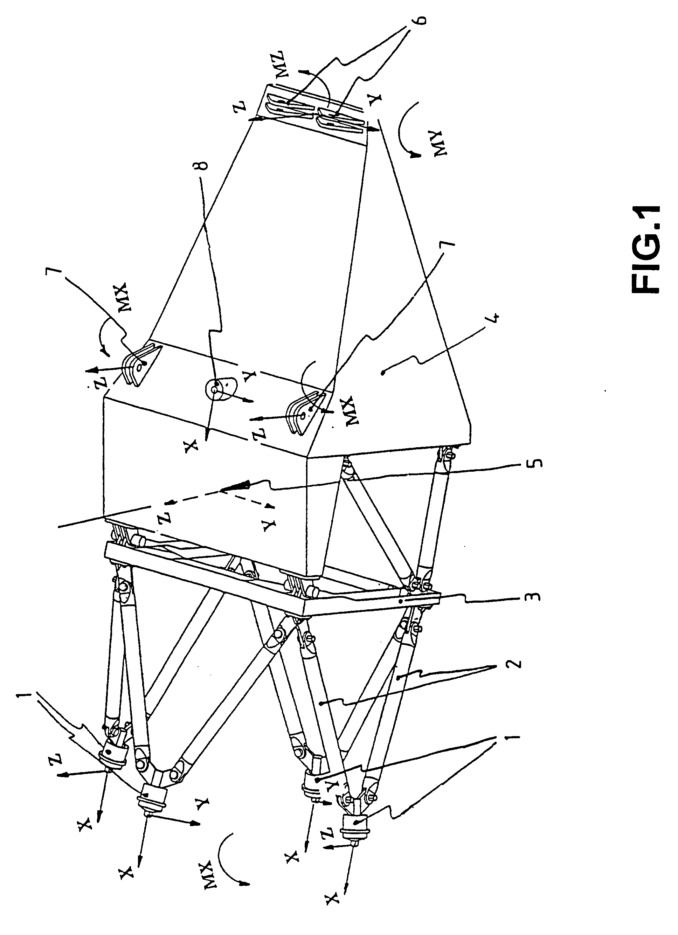

La figure 1 représente un système de suspension traditionnel adapté à un turbopropulseur. Ce dernier est fixé à l'avant par quatre points d'attache 1 qui sont liés chacun aux extrémités de deux biellettes 2.

A leur autre extrémité, ces biellettes 2 sont réunies à un cadre intermédiaire 3. Ce dernier est relié au bâti de liaison 4 avec l'aile. A l'arrière du moteur existe un point de fixation 5 avec le bâti de liaison 4. L'ensemble est fixé à l'aile de l'avion par les points 6, 7 et 8.

Il est clair qu'avec une telle suspension le moteur est emprisonné dans une structure qui ne facilite pas la mise en place des équipements sur le moteur. A titre d'exemple sur un tel moteur, la présence du réducteur de vitesse de l'hélice entraîne une augmentation très importante du débit d'huile total. La consommation d'huile propre à ce réducteur est d'environ 60% du débit total. Il est ainsi nécessaire de disposer d'un réservoir grande contenance plus difficile à loger contre le moteur.

US-3 201 069 divulgue un turbopropulseur suspendu directement sous l'aile, à l'arrière par un point, et au milieu par un arceau tenant le moteur en deux points sur les flancs. Ce document ne fournit aucune indication sur les moyens qui supportent le couple de réaction selon l'axe du moteur.

US-4 875 655 divulgue une fixation latérale d'un turbomoteur entraînant des hélices contrarotatives. Cette fixation comporte un mât parallèle à l'axe du moteur, un point de fixation élastique à l'avant et un arceau tenant le moteur par deux liaisons élastiques à l'arrière. Mais avec ce type de moteur, la trajectoire de l'air est redressée par la seconde hélice, et la trajectoire de l'air à l'arrière du moteur est pratiquement rectiligne. Ces moteurs ne présentent donc pas un couple de réaction très important selon l'axe du moteur.

Sachant que le décalage angulaire du turbopropulseur sous l'effet du couple de réaction ne doit pas excéder 1° à 1,5°, il faudrait avec les gros turbopropulseurs durcir de façon excessive les liaisons élastiques avec la structure, ce qui ne permettrait plus alors le filtrage des vibrations.

Le but de la présente invention est de proposer un dispositif de suspension notamment pour turbopropulseurs de forte puissance qui permette de dégager les flancs des moteurs pour en faciliter l'accès en maintenance sans dépose, et autoriser des équipements plus volumineux sur le moteur, par exemple le réservoir d'huile du réducteur, et qui, surtout, permette de maintenir le moteur par une suspension qui soit suffisamment souple pour ne pas transmettre les vibrations du moteur à l'avion, et suffisamment rigide en torsion selon l'axe du moteur, afin que celui-ci n'ait qu'un pivotement limité, de l'ordre de 1° à 2° sous l'effet du couple de réaction.

Le but est atteint selon l'invention par le fait que le dispositif de suspension proposé comporte
un mât de suspension parallèle à l'axe du moteur et fixé sur l'élément structurel de l'avion,
une première liaison élastique entre le mât et l'arrière du moteur,
au moins une deuxième liaison élastique entre l'avant du moteur et un arceau fixé audit mât et situé dans un plan perpendiculaire à l'axe du moteur entre le mât et le moteur, et est caractérisé par
une barre de torsion portée par l'arceau de telle manière qu'elle puisse pivoter librement et dont les extrémités sont reliées aux flancs du moteur, chacune par un levier et une bielle, ladite barre de torsion étant destinée à reprendre le couple de réaction selon l'axe du moteur.

Grâce à cette disposition, le première liaison élastique et la deuxième liaison élastique sont déchargées de la fonction de reprise du couple transmis par le réducteur de vitesse autour de l'axe du moteur.

D'autres avantages et caractéristiques de l'invention ressortiront à la lecture de la description suivante faite à titre d'exemple et en référence aux dessins annexés dans lesquels :
la figure 1 représente un système de suspension traditionnel d'un turbopropulseur ;
la figure 2 montre schématiquement le dispositif de suspension d'un turbopropulseur sous l'aile d'un avion, selon l'invention ;
la figure 3 montre le dispositif de suspension de la figure 2, le mât de suspension n'étant pas représenté par souci de clarté ;
la figure 4 montre les moyens de liaison avant et arrière du moteur sur le mât de suspension ;
la figure 5 montre un turbopropulseur suspendu sous le mât de suspension et les efforts exercés par le mât de suspension sur l'élément structurel de support du mât.

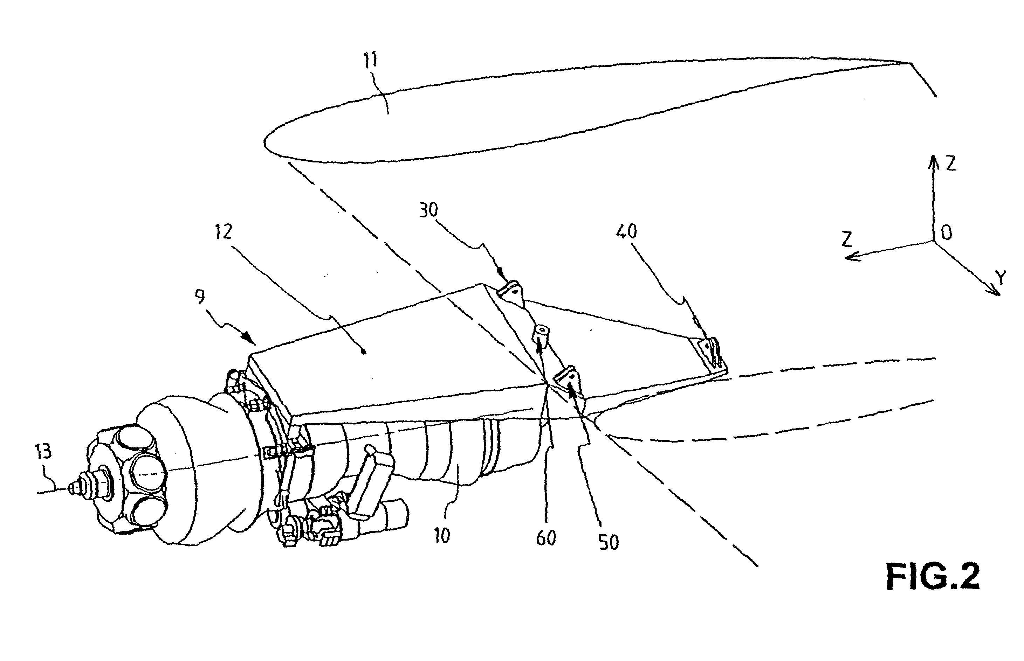

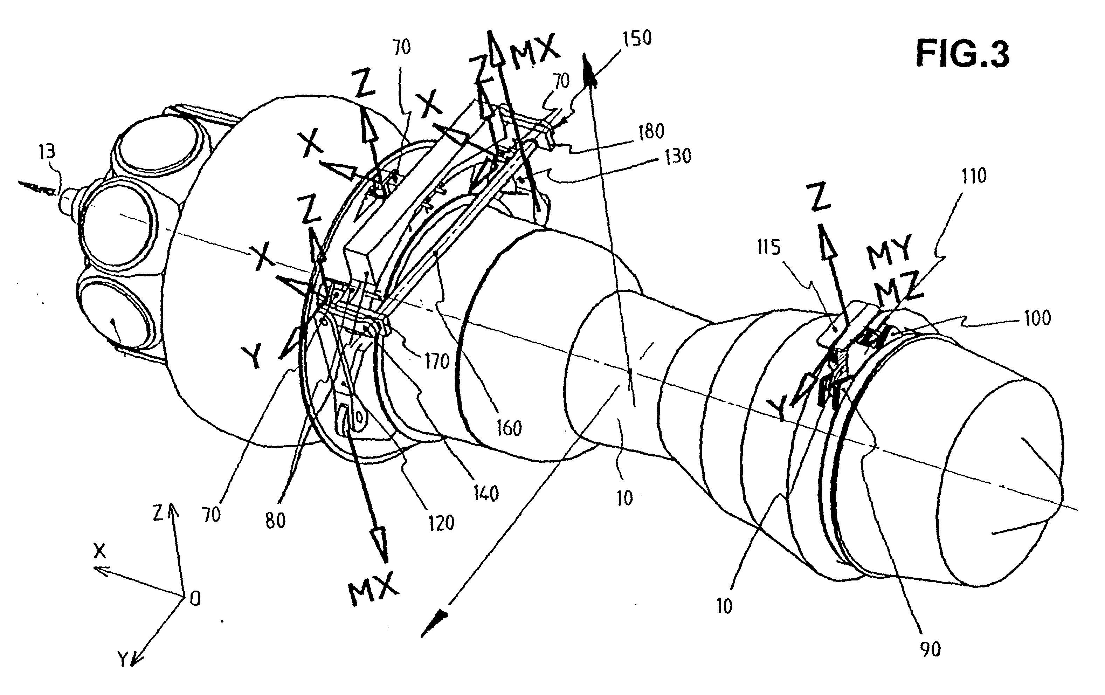

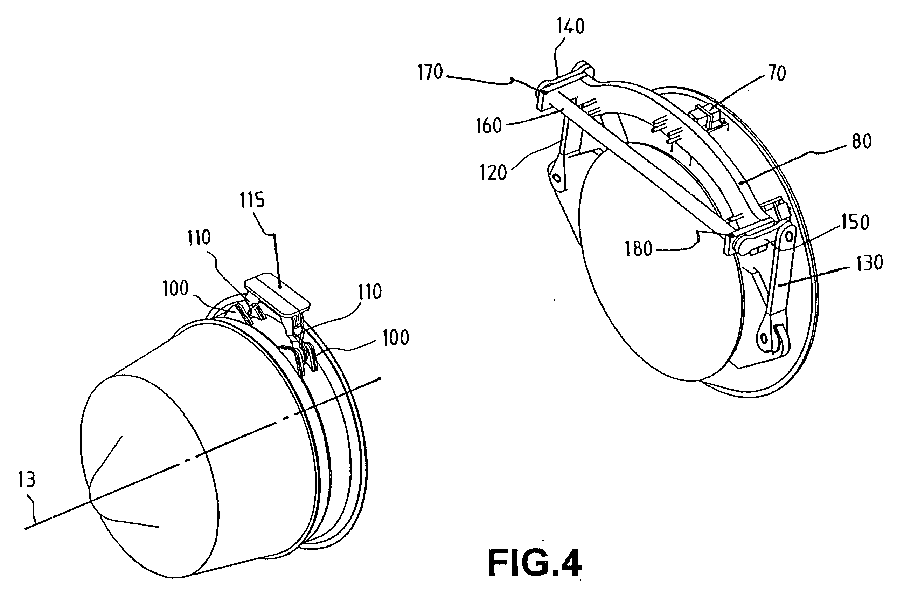

Les figures 2 à 5 montrent un dispositif de suspension 9 d'un turbopropulseur 10 sous l'aile 11 d'un avion.

Ce dispositif comporte un mât de suspension 12 qui doit supporter les efforts transmis par le moteur 10 suivant la direction OX parallèle à l'axe 13 du moteur 10, la direction horizontale OY perpendiculaire à OX et la direction verticale OZ, et assurer la reprise du couple transmis par le réducteur de vitesse de l'hélice autour de l'axe OX.

Le mât de suspension 12 se présente sous la forme d'une pièce horizontale parallèle à l'axe OX, et il comporte sur sa face supérieure trois chapes 30, 40, 50 et un plot de fixation 60 qui assurent la liaison du mât 12 sous l'aile de l'avion équipée du turbopropulseur 10.

Le moteur 10 est relié dans sa partie avant à un arceau 80 au moyen de trois liaisons souples 70 qui supportent des efforts suivant les axes OX, OY et OZ. L'arceau 80 est fixé sur la face inférieure du mât de suspension 12 par boulonnage.

Le moteur 10 comporte dans sa partie arrière supérieure deux chapes 90, 100 qui sont liées au mât de suspension 12 par deux biellettes 110 et une chape 115. Ces pièces de suspensions supportent des efforts suivant les axes OY et OZ et les moments MY et MZ autour de respectivement les axes OY et OZ.

Le couple MX centré sur l'axe OX et qui est dû à la présence du réducteur de vitesse de l'hélice est transmis par le moteur 10 à deux bielles 120 et 130 sensiblement parallèles dont les extrémités inférieures sont articulées sur des flancs latéraux du moteur 10 et dont les extrémités supérieures sont articulées sur les extrémités libres de deux leviers 140 et 150 qui sont solidaires des extrémités d'une barre de torsion 160. La barre de torsion 160, sensiblement parallèle à l'axe OY, est supportée par deux paliers 170 et 180 sur l'arceau 80, de telle manière qu'elle puisse pivoter librement sous l'action du couple MX.

Ainsi, le couple MX du réducteur de vitesse de l'hélice est absorbé par la torsion de la barre 160.

L'arceau 80 et la chape 115 située à l'arrière sont boulonnés sur la face inférieure du mât de suspension 12.

La suspension du moteur 10 est ainsi localisée sur une surface du mât de suspension 12. Cette disposition permet de disposer de beaucoup plus de place sur le moteur 10 pour placer des équipements et effectuer les opérations de maintenance.

La séparation du moteur 10 se fait au niveau de l'arceau 80 et de la chape arrière 115. Les multiples points de liaison du moteur 10 sur ces deux pièces 80 et 115 ne sont pas démontés.

Le mât de suspension 12 est le support et l'interface unique pour les liaisons avion-moteur.

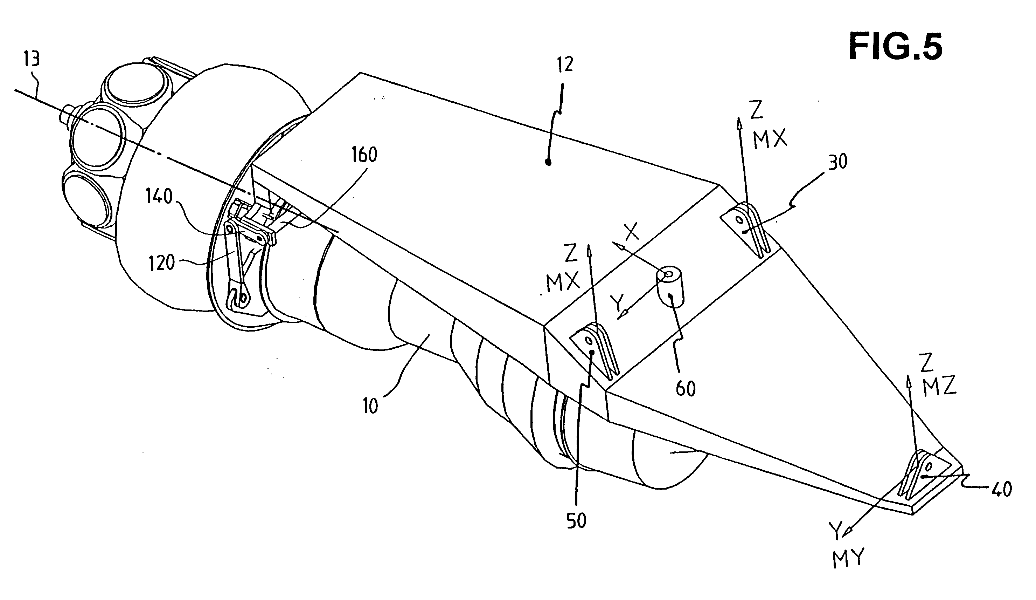

La figure 5 montre les efforts supportés par les chapes 30, 40, 50 et le plot de fixation 60 qui assurent la liaison entre le mât de suspension 12 et l'aile de l'avion. Les efforts selon les axes OX et OY sont repris par le plot de fixation 60. Les efforts selon l'axe OZ sont repartis sur les chapes 30, 40, 50. Les moments MY et MZ sont repris par la chape arrière 40 et le moment MX est repris par les chapes 30 et 50.

Dans la description faite ci-dessus, le moteur 10 est disposé sous l'aile de l'avion. Mais le dispositif de suspension proposé s'adapte à n'importe quel autre positionnement du moteur 10.

## Revendications

1. Dispositif de suspension d'un turbopropulseur sur un élément structurel d'un avion, comportant:
un mât de suspension (12) parallèle à l'axe (13) du moteur (10) et fixé sur l'élément structurel de l'avion,
une première liaison élastique entre le mât (12) et l'arrière du moteur (10),
au moins une deuxième liaison élastique entre l'avant du moteur (10) et un arceau (80) fixé audit mât (12) et situé dans un plan perpendiculaire à l'axe (13) du moteur (10) entre le mât (12) et le moteur (10), et caractérisé par le fait qu'il comporte:
une barre de torsion (160) portée par l'arceau (80) de telle manière qu'elle puisse pivoter librement et dont les extrémités sont reliées aux flancs du moteur (10), chacune par un levier (130, 140) et une bielle (110, 120), ladite barre de torsion (160) étant destinée à reprendre le couple de réaction (MX) selon l'axe (13) du moteur (10).

## Claims

1. A device for suspending a turboprop engine on a structural element of an aircraft, comprising:
a suspension pylon (12) extending parallel to the axis (13) of the engine (10) and secured to the structural element of the aircraft,
a first resilient connection between the pylon (12) and the rear of the engine 10,
at least one second resilient connection between the front of the engine (10) and an arch (80) secured to said pylon (12) and disposed in a plane perpendicular to the engine axis (13) between the pylon (12) and the engine (10), and characterised in that
a torsion bar (160) is so carried by the arch (80) as to be freely pivotable, the ends of the torsion bar being connected to the sides of the engine (10) in each case by a lever (130, 140) and a rod (110,120), the torsion bar (160) being adapted to take up the reaction couple (MX) acting along the axis (13) of the engine (10).

## Patentansprüche

1. Aufhängungsvorrichtung für ein Turboprop-Triebwerk an einem Element eines Flugzeugaufbaus, bestehend aus:
- einer zur Achse (13) des Triebwerks (10) parallel verlaufenden Aufhängungsstrebe (12), die an einem Element eines Flugzeugaufbaus befestigt ist,
- einer ersten elastischen Verbindung zwischen der Strebe (12) und der Hinterseite des Triebwerks(10),
- mindestens einer zweiten elastischen Verbindung zwischen der Vorderseite des Triebwerks (10) und einem Bogen (80), der an dieser Strebe (12) befestigt ist und sich in einer Ebene senkrecht zu der Achse (13) des Triebwerks (10) zwischen der Strebe (12) und dem Triebwerk (10) befindet,
**dadurch gekennzeichnet,**
**dass** sie eine Drehstange (160) aufweist, die von dem Bogen (80) dergestalt gehalten wird, dass sie sich frei drehen kann, und deren Enden jeweils durch einen Hebel (130, 140) und eine Gelenkstange (110, 120) mit den Flanken des Triebwerks (10) verbunden sind, wobei diese Drehstange (160) dazu vorgesehen ist, das Rückstoßmoment (MX) entlang der Achse (13) des Triebwerks (10) aufzufangen.
